# EUROPÄISCHE PATENTSCHRIFT

(11) **EP 3 949 053 B1**
(45) Veröffentlichungstag und Bekanntmachung des Hinweises auf die Patenterteilung: **28.06.2023**
(21) Anmeldenummer: 20728979.4
(22) Anmeldetag: 15.05.2020
(51) Int. Cl.: H02H 3/087, H02H 7/26, H02H 3/08, H02H 3/00, H02H 6/00

(54) **ÜBERSTROMSCHUTZVORRICHTUNG FÜR DEN SCHUTZ EINES IN EINEM GLEICHSTROMNETZ ANGEORDNETEN VERBRAUCHERS**
OVERCURRENT PROTECTION DEVICE FOR PROTECTING A CONSUMER IN A DC NETWORK
DISPOSITIF DE PROTECTION CONTRE LES SURINTENSITÉS DESTINÉ À LA PROTECTION D'UN CONSOMMATEUR DISPOSÉ DANS UN RÉSEAU DE COURANT CONTINUE

(30) Priorität: 17.05.2019 EP 19175083
(43) Veröffentlichungstag der Anmeldung: 09.02.2022
(73) Patentinhaber: Siemens Aktiengesellschaft, 80333 München (DE)
(72) Erfinder: KALUZA, Peter, 92286 Rieden (DE); BEHRINGER, Klaus, 91338 Igensdorf (DE); FEIL, Wolfgang, 92421 Schwandorf (DE); MEIER, Matthias, 92284 Poppenricht (DE); BURGER, Josef, 92546 Schmidgaden (DE); BÄR, Thomas, 92260 Fichtenhof (DE); LEHMEIER, Annemarie, 92289 Ursensollen (DE)
(74) Vertreter: Siemens Patent Attorneys
(86) Internationale Anmeldenummer: PCT/EP2020/063571
(87) Internationale Veröffentlichungsnummer: WO 2020/234136

(56) Entgegenhaltungen:
- EP-A1- 2 608 340
- EP-B1- 2 608 340
- US-A1- 2014 240 882
- US-A1- 2015 107 646

## Beschreibung

Die Erfindung betrifft eine Überstromschutzvorrichtung für den Schutz eines in einem Gleichstromnetz angeordneten Verbrauchers, ein Gleichstromnetz sowie Verfahren zum Betreiben einer Überstromschutzvorrichtung und eines Gleichstromnetzes.

Lastanordnungen, die aus einem Gleichstromnetz (DC-Netz) versorgt werden, kommen insbesondere im industriellen Umfeld zum Einsatz. Die Versorgung von Lastanordnungen aus Gleichstromnetzen bietet den Vorteil durch intelligente Netzsteuerung und integrierte Speicher flexibel und robust auf schwankende Netzqualität und Energieangebote reagieren zu können. Insbesondere können regenerative Energieerzeuger, wie zum Beispiel Batteriespeicher und/oder Photovoltaikanlagen leicht in ein Gleichstromnetz eingebunden werden. Wandlungsverluste von Wechsel- in Gleichspannung können dabei vermieden werden. Durch die Möglichkeit, Bremsenergie, zum Beispiel von generatorisch betriebenen Antrieben, puffern zu können, ergeben sich Energieeinsparungen.

Die Verteilung der Energie in einem Gleichstromnetz erfolgt ähnlich wie in den bislang verwendeten Wechselstromnetzen. In baumähnlichen Gleichstromnetzen nimmt, ausgehend von der Energiequelle oder einer Versorgungsschiene, die Stromstärke und auch der benötigte Kabelquerschnitt von der Einspeisung bis zu den Verbrauchern schrittweise ab. Bei jeder Änderung des Leitungsquerschnitts, d.h. nach jeder Verzweigung, werden üblicherweise steuerbare Überstromschutzvorrichtungen vorgesehen, die im Falle eines im nachfolgenden Leitungszweig detektierten Überstroms schnell abschalten. Überströme in einem Leitungszweig können nicht nur bei Fehlern in dem Leitungszweig, sondern auch bei stark unterschiedlichen Verbrauchern in verschiedenen Leitungszweigen auftreten, wenn z.B. einer der Verbraucher in den generatorischen Betrieb übergeht und kurzzeitig Strom in den anderen Leitungszweig einspeist.

Die Patentschrift EP 2608340 B1 offenbart ein multidirektionales Leistungsschutzsystem welches mehrere Auslösekurven verwendet.

Es ist Aufgabe der Erfindung, eine Überstromschutzvorrichtung und ein Verfahren für den Betrieb in einem Gleichstromnetz anzugeben, welche funktionell und/oder baulich im Hinblick auf ihre Schutzfunktion verbessert sind. Es ist ferner Aufgabe der Erfindung, ein Gleichstromnetz mit einer solchen Überstromschutzvorrichtung und ein Verfahren für dessen Betrieb anzugeben, welches funktionell und/oder baulich verbessert ist.

Diese Aufgaben werden gelöst durch eine Überstromschutzvorrichtung gemäß den Merkmalen des Anspruchs 1, ein Gleichstromnetz gemäß den Merkmalen des Anspruchs 8, ein Verfahren zum Betrieb der Überstromschutzvorrichtung gemäß den Merkmalen des Anspruchs 12, ein Computerprogrammprodukt gemäß den Merkmalen des Anspruchs 13, ein Verfahren zum Betrieb des Gleichspannungsnetzes gemäß den Merkmalen des Anspruchs 14 und ein Computerprogrammprodukt gemäß den Merkmalen des Anspruchs 16. Vorteilhafte Ausgestaltungen ergeben sich aus den abhängigen Ansprüchen.

Gemäß einem ersten Aspekt der vorliegenden Erfindung wird eine Überstromschutzvorrichtung für den Schutz eines in einem Gleichstromnetz angeordneten Verbrauchers vorgeschlagen. Bei dem Verbraucher handelt es sich insbesondere um einen oder mehrere kapazitive Verbraucher. Solche kapazitiven Verbraucher sind beispielsweise Wechselrichter, welche aus der vom Gleichstromnetz bereitgestellten Spannung eine Dreh- oder wenigstens eine Wechselspannung für eine Last, z.B. einen Motor, erzeugen. Derartige Wechselrichter weisen neben einer Anzahl an Schaltelementen in der Regel eine oder mehrere Kapazitäten zu deren Betrieb auf.

Der Verbraucher ist in dem Gleichstromnetz über die Überstromschutzvorrichtung mit einer, mit einem Versorgungspotential des Gleichstromnetzes verbindbaren oder verbundenen, Versorgungsschiene gekoppelt. Die Versorgungsschiene kann somit unmittelbar, d.h. ohne Zwischenschaltung weiterer elektronischer Bauelemente, mit dem Versorgungspotential verbunden sein. Alternativ kann die Versorgungsschiene über weitere elektronische Bauelemente, insbesondere ein steuerbares Schaltelement, an das Versorgungspotential angeschlossen sein. Das Vorsehen eines steuerbaren Schaltelements zwischen der Versorgungsschiene und dem Versorgungspotential ermöglicht es, die Versorgungsschiene von dem Versorgungspotential zu trennen.

Bei der Überstromschutzvorrichtung handelt es sich um eine steuerbare Überstromschutzvorrichtung, welche im Falle eines auftretenden Überstroms das Trennen des Verbrauchers von der Versorgungsschiene ermöglicht. Zu diesem Zweck kann die Überstromschutzvorrichtung ein steuerbares Schaltelement, insbesondere ein leistungselektronisches Bauelement, umfassen. Zur Detektion eines Überstroms verfügt die Überstromschutzvorrichtung vorzugsweise über Mittel, welche die Erfassung eines den Stromwertes ermöglichen.

Die Überstromschutzvorrichtung ist dazu ausgebildet, basierend auf einem Erfassungswert eines durch die Überstromschutzvorrichtung fließenden Stroms und eine dem Verbraucher zugeordnete stromabhängige Auslösekennlinie einen aktuellen Auslösewert zu ermitteln. Der aktuelle Auslösewert ist ein rechnerischer Wert, der aus dem Erfassungswert, der den aktuell durch die Überstromschutzvorrichtung fließenden Strom repräsentiert, und der stromabhängigen Auslösekennlinie ermittelt wird. Der aktuelle Auslösewert stellt somit ein Maß für die thermische Beanspruchung des Systems in Bezug auf den durch die Überstromschutzvorrichtung und damit den zu schützenden Verbraucher fließenden Strom dar.

Der aktuelle Auslösewert wird mit einem vorab festgelegten Schwellwert verglichen. Der vorab festgelegte Schwellwert stellt eine Auslösediskriminante dar. Abhängig vom Ergebnis des Vergleichs löst dann die Überstromschutzvorrichtung aus oder nicht. Nimmt beispielsweise mit zunehmend durch die Überstromschutzvorrichtung fließendem Strom der rechnerisch ermittelte aktuelle Auslösewert zu, so erfolgt beim Überschreiten des vorab festgelegten Schwellwerts eine Auslösung der Überstromschutzvorrichtung, wodurch der Verbraucher von der Versorgungsschiene elektrisch getrennt wird. Solange der aktuelle Auslösewert den vorab festgelegten Schwellwert nicht überschreitet, findet keine Auslösung der Überstromschutzvorrichtung statt. Der vorab festgelegte Schwellwert kann beispielsweise durch Versuche oder durch numerische Bestimmung festgelegt sein. Der vorab festgelegte Schwellwert kann hierzu in einem Speicher der Überstromschutzvorrichtung dauerhaft gespeichert sein. Der vorab festgelegte Schwellwert wird beispielsweise derart gewählt, dass dieser einen vorgegebenen prozentualen Betrag über einem Auslösewert liegt, der sich bei Nennstrom ergibt.

Dabei wird in der Auslösekennlinie, abhängig von der Stromrichtung, der Strom mit einem ersten oder mit einem zweiten Faktor berücksichtigt, d.h. verarbeitet. Die richtungsabhängige Berücksichtigung des Stroms ermöglicht mittels des ersten und zweiten Faktors eine Gewichtung und dadurch eine bessere Abbildung der thermischen Vorgänge in der Überstromschutzvorrichtung. Dadurch erhält man eine höhere Verfügbarkeit bei gleichem Schutzniveau im Vergleich zu den bislang verwendeten Schmelzsicherungen.

Dadurch, dass, abhängig von der Stromrichtung, der Strom in der Auslösekennlinie mit einem ersten oder einem zweiten Faktor berücksichtigt wird, ergibt sich abhängig von der Stromrichtung ein unterschiedlicher aktueller Auslösewert. Hierdurch kann beispielsweise ein durch die Stromrichtung hervorgerufener kühlender Effekt in dem Verbraucher zuverlässig berücksichtigt werden. Der erste Faktor und der zweite Faktor sind z.B. durch Versuche oder Simulationen bestimmt. Der erste und der zweite Faktor sind in der Regel unterschiedlich.

Gemäß einer zweckmäßigen Ausgestaltung umfasst die Überstromschutzvorrichtung ein steuerbares Schaltelement und eine zu diesem in Serie verschaltete Strommesseinrichtung. Die Strommesseinrichtung erfasst die Höhe des während einer Einschaltphase des steuerbaren Schaltelements durch das steuerbare steuerbare Schaltelement fließenden Stroms und stellt diesen als Erfassungswert bereit. Gemäß dieser Ausgestaltung umfasst die Überstromschutzvorrichtung selbst die Strommesseinrichtung, welche den zu Ermittlung des aktuellen Auslösewerts erforderlichen Erfassungswert bestimmt und bereitstellt. In einer anderen Ausgestaltung können der Stromwert und der Erfassungswert auch von einer Strommesseinrichtung außerhalb der Überstromschutzvorrichtung bereitgestellt werden. Um die Stromrichtung, die durch den Verbraucher fließt, korrekt erfassen zu können, kann die Strommesseinrichtung einen auf dem Hall-Prinzip basierenden Sensor umfassen.

Eine weitere zweckmäßige Ausgestaltung sieht vor, dass der erste und/oder der zweite Faktor in Abhängigkeit des zu schützenden Verbrauchers parametrierbar oder parametriert sind/ist. Abhängig von der Art und/oder dem Typ und/oder der Leistungsklasse des Verbrauchers können für die ihm zugeordnete stromabhängige Auslösekennlinie der erste und/oder der zweite Faktor bestimmt werden. In der Regel werden der erste und der zweite Faktor unterschiedliche Beträge aufweisen. Unter Umständen können jedoch der erste und der zweite Faktor auch den gleichen Betrag aufweisen, wodurch sich jedoch dann kein Unterschied im aktuellen Auslösewert ergibt, unabhängig davon in welche Richtung der Strom durch den Verbraucher fließt.

Eine weitere zweckmäßige Ausgestaltung sieht vor, dass der erste und/oder zweite Faktor in Abhängigkeit des Verlaufs der Auslösekennlinie parametrierbar oder parametriert sind. Die Auslösekennlinie, die individuell für den jeweiligen Verbraucher festgelegt ist, kann beispielsweise abhängig von der Art und/oder dem Typ und/oder der Nennleistung gewählt sein. Beispielsweise können Auslösekennlinien abhängig von einer linearen oder quadratischen Berücksichtigung des durch den Verbraucher fließenden Stroms sein. Während manche Verbraucher beispielsweise Auslösekennlinien mit einer quadratischen Abhängigkeit des durch sie fließenden Stroms aufweisen, haben andere Verbraucher eine Auslösekennlinie, welche eine lineare Abhängigkeit des Stroms berücksichtigen.

Es ist weiterhin zweckmäßig, wenn der vorab festgelegte Schwellwert in Abhängigkeit des zu schützenden Verbrauchers parametrierbar oder parametriert ist. Durch den vorab festgelegten Schwellwert kann, wie oben beschrieben, festgelegt werden, unter welchen Bedingungen, die in der Regel temperaturabhängig sind, die Überstromschutzvorrichtung auslöst oder nicht.

Wenn in der vorliegenden Beschreibung von einer Parametrierung oder Parametrierbarkeit verschiedener Parameter die Rede ist, so ist hierunter zu verstehen, dass für jeden Verbraucher bzw. jede Überstromschutzvorrichtung die entsprechenden Parameter in einen Speicher der das Verfahren ausführenden Recheneinheit hinterlegt werden. Dies kann entweder bei der Auslieferung bzw. Erstinbetriebnahme der Überstromschutzvorrichtung einmalig geschehen. Alternativ kann auch vorgesehen sein, dass eine Veränderung der Parametrierung im laufenden Betrieb vorgenommen wird.

Insbesondere repräsentiert die Auslösekennlinie eine Modellierung der Erwärmung des zu schützenden Verbrauchers.

Gemäß einem zweiten Aspekt wird ein Gleichstromnetz vorgeschlagen, das eine Versorgungsschiene, die mit einem Versorgungspotential des Gleichstromnetzes verbindbar oder verbunden ist, und eine zumindest einen Verbraucher umfassende Lastanordnung umfasst. Jede der Verbraucher ist über eine zugeordnete, steuerbare Überstromschutzvorrichtung mit der Versorgungsschiene gekoppelt. Jedem der Verbraucher ist eine stromabhängige Auslösekennlinie zugeordnet. Die Überstromschutzvorrichtung ist gemäß der hierin beschriebenen Art ausgebildet.

Ein derartiges Gleichstromnetz weist die gleichen Vorteile auf, wie diese vorstehend in Verbindung mit einer erfindungsgemäßen Überstromschutzvorrichtung beschrieben wurden.

Gemäß einer zweckmäßigen Ausgestaltung des Gleichstromnetzes ist die Versorgungsschiene über eine Überstromschutzvorrichtung der hierin beschriebenen Art mit einem Versorgungspotential des Gleichstromnetzes verbindbar oder verbunden, wobei die Überstromschutzvorrichtung dazu ausgebildet ist, eine der Lastanordnung zugeordnete stromabhängige Auslösekennlinie zu verarbeiten. Gemäß dieser Ausgestaltung ist die Überstromschutzvorrichtung nicht einem einzelnen Verbraucher, sondern einer gesamten Lastanordnung, die eine Vielzahl an Verbrauchern aufweist, zugeordnet. Die hier beschriebene Überstromschutzvorrichtung liegt damit in einem übergeordneten Leitungszweig, der eine Anzahl an Verbrauchern der Lastanordnung mit Strom versorgt.

Eine weitere zweckmäßige Ausgestaltung sieht vor, dass bei einer Mehrzahl an Verbrauchern jedem Verbraucher eine jeweilige stromabhängige Auslösekennlinie zugeordnet ist, die paarweise gleich oder unterschiedlich sein können. Alternativ oder zusätzlich kann bei einer Mehrzahl an Verbrauchern jedem Verbraucher ein jeweiliger vorab festgelegter Schwellwert zugeordnet sein, die paarweise gleich oder unterschiedlich sein können. Mit anderen Worten können den Verbrauchern gleiche oder unterschiedliche stromabhängige Auslösekennlinien zugeordnet sein. Ebenso können den Verbrauchern gleiche oder unterschiedliche, jeweils vorab festgelegte Schwellwerte zur Durchführung des oben beschriebenen Verfahrens zugeordnet sein. Dies ist insbesondere dann von Bedeutung, wenn in dem Gleichstromnetz Verbraucher stark unterschiedlicher Nennleistung vorgesehen sind. Hier kann der Betriebszustand eines Verbrauchers einer großen Nennleistung Rückwirkungen auf den Leitungszweig des Verbrauchers einer kleinen Nennleistung haben, z.B. im generatorischen Betrieb. Diese unterschiedlichen Betriebssituationen können durch die Parametrierung in der beschriebenen Weise berücksichtigt werden, so dass ein unnötiges und/oder zu frühes Abschalten bzw. Auflösen der Überstromschutzvorrichtung vermieden werden kann.

Gemäß einem dritten Aspekt der vorliegenden Erfindung wird ein Verfahren zum Betreiben einer Überstromschutzvorrichtung für den Schutz eines in einem Gleichstromnetz angeordneten Verbrauchers vorgeschlagen. Der Verbraucher ist in dem Gleichstromnetz über die Überstromschutzvorrichtung mit einer mit einem Versorgungspotential des Gleichstromnetzes verbindbaren oder verbundenen Versorgungsschiene gekoppelt. Bei dem Verfahren wird basierend auf einem Erfassungswert eines durch die Überstromschutzvorrichtung fließenden Stroms und einer dem Verbraucher zugeordneten stromabhängigen Auslösekennlinie ein aktueller Auslösewert ermittelt, wobei in der Auslösekennlinie, abhängig von der Stromrichtung, der Strom mit einem ersten oder einem zweiten Faktor berücksichtigt wird. Ferner wird bei dem Verfahren der aktuelle Auslösewert mit einem vorab festgelegten Schwellwert verglichen. Schließlich wird abhängig vom Ergebnis des Vergleichs die Überstromschutzvorrichtung ausgelöst oder nicht.

Das Verfahren weist die gleichen Vorteile auf, die diese vorstehend in Verbindung mit der erfindungsgemäßen Überstromschutzvorrichtung beschrieben wurden.

Die Erfindung schlägt gemäß einem vierten Aspekt ein Computerprogrammprodukt vor, das direkt in den internen Speicher einer digitalen Steuereinheit eine Überstromschutzvorrichtung geladen werden kann und Softwarecodeabschnitte umfasst, mit denen die Schritte des hierin beschriebenen Verfahrens ausgeführt werden, wenn das Produkt auf der Steuereinheit läuft. Das Computerprogrammprodukt kann in der Gestalt eines Speichermediums, wie z.B. eines USB-Speichersticks, einer DVD, einer CD-ROM oder einer Speicherkarte verkörpert sein. Das Computerprogrammprodukt kann auch in der Gestalt eines über eine drahtlose oder leitungsgebundene Kommunikationsverbindung ladbaren Signals vorliegen.

Gemäß einem fünften Aspekt der vorliegenden Erfindung wird ein Verfahren zum Betreiben eines Gleichstromnetzes vorgeschlagen, das eine Versorgungsschiene, die mit einem Versorgungspotential des Gleichstromnetzes verbindbar oder verbunden ist, und eine zumindest einen Verbraucher umfassende Lastanordnung umfasst, wobei jeder der Verbraucher über eine zugeordnete steuerbare Überstromschutzvorrichtung mit der Versorgungsschiene gekoppelt ist und wobei jedem der Verbraucher eine stromabhängige Auslösekennlinie zugeordnet ist. Bei dem Verfahren werden für jeden des zumindest einen Verbrauchers unabhängig voneinander die folgenden Schritte durchgeführt: Basierend auf einem Erfassungswert eines durch die dem Verbraucher zugeordnete Überstromschutzvorrichtung fließenden Stroms und einer dem jeweiligen Verbraucher zugeordneten stromabhängigen Auslösekennlinie wird ein aktueller Auslösewert ermittelt, wobei in der Auslösekennlinie, abhängig von der Stromrichtung, der Strom mit einem ersten oder einem zweiten Faktor berücksichtigt wird. Der aktuelle Auslösewert wird mit einem für den jeweiligen Verbraucher vorab festgelegten Schwellwert verglichen. Abhängig vom Ergebnis des Vergleichs wird die einem jeweiligen Verbraucher zugeordnete Überstromschutzvorrichtung ausgelöst oder nicht.

Das Verfahren weist die gleichen Vorteile auf, wie diese vorstehend beschrieben wurden.

In einer zweckmäßigen Ausgestaltung wird das Verfahren durch eine zentrale Steuereinheit des Gleichstromnetzes oder durch jeweilige Recheneinheiten der Überstromschutzvorrichtungen durchgeführt. Auch eine Aufteilung der Aufgaben ist denkbar.

Die Erfindung schlägt gemäß einem sechsten Aspekt ein Computerprogrammprodukt vor, das direkt in den internen Speicher einer digitalen Steuereinheit geladen werden kann und Softwarecodeabschnitte umfasst, mit denen die vorab die beschriebenen Schritte ausgeführt werden, wenn das Produkt auf der Steuereinheit läuft. Das Computerprogrammprodukt kann in der Gestalt eines Speichermediums, wie z.B. eines USB-Speichersticks, einer DVD, einer CD-ROM oder einer Speicherkarte verkörpert sein. Das Computerprogrammprodukt kann auch in der Gestalt eines über eine drahtlose oder leitungsgebundene Kommunikationsverbindung ladbaren Signals vorliegen.

Die Erfindung wird nachfolgend näher anhand von Ausführungsbeispielen in der Zeichnung erläutert. Es zeigen:
- Fig. 1: eine schematische Darstellung einer beispielhaften Überstromschutzvorrichtung für den Schutz eines in einem Gleichstromnetz angeordneten Verbrauchers;
- Fig. 2: eine schematische Darstellung eines beispielhaften Gleichstromnetzes mit einer Mehrzahl von Verbrauchern, welche durch jeweilige Überstromschutzvorrichtungen abgesichert sind;
- Fig. 3: ein Diagramm, in dem beispielhafte stromabhängige Auslösekennlinien zur Bestimmung eines Auslösekriteriums visualisiert sind; und
- Fig. 4: ein Ablaufdiagramm, das die Schritte des erfindungsgemäßen Verfahrens illustriert.

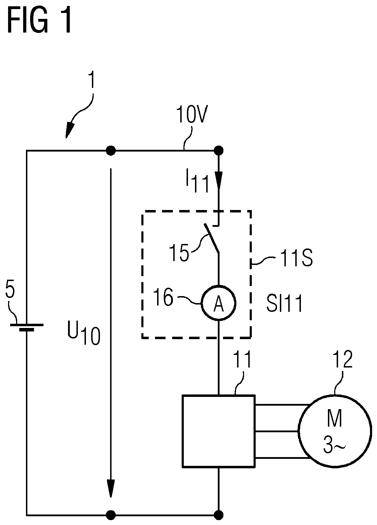

Fig. 1 zeigt eine schematische Darstellung einer Überstromschutzvorrichtung 11S für den Schutz eines in einem Gleichstromnetz angeordneten Verbrauchers. Das Gleichstromnetz 1 (DC-Netz) stellt an einer Versorgungsschiene 10V eine Gleichspannung bereit. In der schematischen Darstellung wird die Gleichspannung beispielhaft von einer Batterie 5 bereitgestellt. Es versteht sich, dass die Batterie 5 lediglich stellvertretend für eine beliebige Energiequelle oder eine Kombination mehrerer Energiequellen steht, an deren Klemmen eine Gleichspannung bereitgestellt wird. Energiequellen können z.B. eine Photovoltaikanlage und/oder ein Batteriespeicher sein, aber auch ein Gleichrichter, der die Gleichspannung durch Gleichrichtung einer von einer Wechselspannungsquelle erzeugten Wechselspannung erzeugt.

Der Verbraucher wird im vorliegenden Ausführungsbeispiel durch einen Wechselrichter 11 repräsentiert, an dem ein dreiphasiger Motor 12 angeschlossen ist. In bekannter Weise wandelt der Wechselrichter 11 die von dem Gleichstromnetz bereitgestellte Gleichspannung in eine von dem Motor 12 benötigte Dreh- oder Wechselspannung um. Der Wechselrichter 11 weist hierzu eine Anzahl an steuerbaren Schaltelementen (nicht dargestellt) sowie mindestens einen Kondensator auf (nicht dargestellt) und stellt daher einen kapazitiven Verbraucher dar.

Es versteht sich, dass der hier gezeigte Verbraucher lediglich beispielhaft ist und stattdessen auch andere Verbraucher, wie z.B. Widerstände und/oder induktive Lasten, verwendet werden könnten.

Die Überstromschutzvorrichtung 11S umfasst ein steuerbares Schaltelement 15 und eine seriell dazu verschaltete Strommesseinrichtung 16. Das steuerbare Schaltelement 15 kann von einer hier nicht dargestellten Steuereinheit (entweder der Überstromschutzvorrichtung 11S selbst oder einer übergeordneten Steuereinheit) leitend oder sperrend geschaltet werden. Ist das steuerbare Schaltelement leitend geschaltet, so ist der Verbraucher 11, 12 (d.h. die zusammengehörige Einheit aus Wechselrichter 11 und daran angeschlossenem Motor 12) mit der Versorgungsschiene 10V verbunden, so dass ein Strom I₁₁ über das steuerbare Schaltelement 15 und die Strommesseinrichtung 16 in den Verbraucher 11, 12 fließt. Im Falle eines Überstroms wird das steuerbare Schaltelement 15 von der Steuereinheit sperrend geschaltet, so dass der Stromfluss in den Verbraucher 11, 12 unterbunden ist.

Das steuerbare Schaltelement 15 ist ein leistungselektronisches Bauelement, z.B. ein MOSFET (Metal Oxid Silicon Field Effect Transistor), IGBT (Insulated Gate Bipolar Transistor), und so weiter. Das leistungselektronische Bauelement kann vom n- oder p-Kanal-Typ bzw. npn- oder pnp-Typ sein. Das Halbleitermaterial kann auf Silizium (Si) oder Gallium-Nitrid (GaN) oder Ähnlichem basieren. Das steuerbare Schaltelement kann ein oder mehrere leistungselektronische Bauelemente der genannten Art umfassen insbesondere antiseriell oder parallel geschaltet.

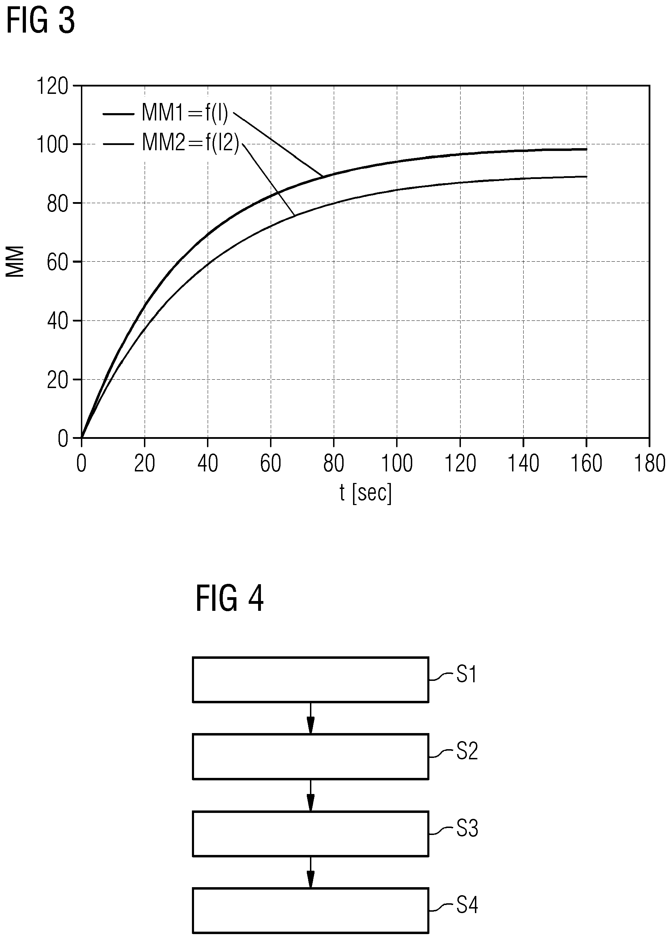

Dem Verbraucher 11, 12 ist eine stromabhängige Auslösekennlinie zugeordnet. Die stromabhängige Auslösekennlinie repräsentiert eine Modellierung der Erwärmung des zu schützenden Verbrauchers. Beispielhaft stromabhängige Auslösekennlinien sind in Fig. 3 gezeigt, wobei das Diagramm die aktuellen Auslösewerte MM zweier unterschiedlicher stromabhängiger Auslösekennlinien MM1, MM2 in Abhängigkeit der Zeit zeigt. Die mit MM1 bezeichnete obere Kennlinie stellt eine stromabhängige Kennlinie dar, welche eine lineare Abhängigkeit vom Strom, der durch den Verbraucher fließt, aufweist. Die mit MM2 gekennzeichnete untere Kennlinie stellt eine Kennlinie dar, die eine quadratische Abhängigkeit von dem durch den Verbraucher fließenden Strom aufweist. Die Kennlinien sind lediglich beispielhaft gewählt und dienen zum Zwecke der Illustration. Der tatsächliche Verlauf der Kennlinien, der eine Erwärmung in Abhängigkeit der Zeit und des durch den Verbraucher fließenden Stroms repräsentiert, kann in der Praxis auch anders aussehen.

Die in Fig. 1 dargestellte Überstromschutzvorrichtung 11S ist dazu ausgebildet, basierend auf einem Erfassungswert des durch die Überstromschutzvorrichtung 11S und damit den Verbraucher 11, 12 fließenden Stroms I₁₁ und der dem Verbraucher 11, 12 zugeordneten stromabhängigen Auslösekennlinie (MM1 oder MM2) einen aktuellen Auslösewert zu ermitteln. Der aktuelle Auslösewert wird durch die bereits erwähnte, jedoch nicht dargestellte, Steuereinheit rechnerisch anhand des Ist-Stroms und z.B. der in einem Speicher hinterlegten Rechenvorschrift der stromabhängigen Auslösekennlinie bestimmt (Schritt S1 des Ablaufdiagramms in Fig. 4). In einem nächsten Schritt (Schritt S2 des Ablaufdiagramms in Fig. 4) wird der aktuell ermittelte Auslösewert mit einem vorab festgelegten Schwellwert verglichen. Der vorab festgelegte Schwellwert wird als Auslösediskriminante bezeichnet und ist in einem Speicher der Steuereinheit hinterlegt. Der Schwellwert kann vorab durch Versuche oder herstellerseitig für den betrachteten Verbraucher vorgegeben sein. In einem Schritt S3 erfolgt ein Vergleich des aktuellen Auslösewerts mit dem vorab festgelegten Schwellwert (Schritt S3 in Fig. 4). Abhängig vom Ergebnis des Vergleichs erfolgt dann eine Auslösung der Überstromschutzvorrichtung, wobei unter einer Auslösung ein Sperrendschalten des steuerbaren Schaltelements 15 verstanden wird (Schritt S4 in Fig. 4).

In der Auslösekennlinie wird dabei, abhängig von der Stromrichtung, der Strom I₁₁, der durch die Strommesseinrichtung aktuell als Ist-Strom ermittelt wird, mit einem ersten oder einem davon unterschiedlichen zweiten Faktor berücksichtigt. Die Berücksichtigung der Stromrichtung ermöglicht z.B. kühlende Effekte. Dadurch erfolgt keine statische Auslösung der Überstromschutzvorrichtung, wie dies beispielsweise bei herkömmlichen Schmelzsicherungen der Fall ist, sondern vielmehr eine in Abhängigkeit der Betriebssituation angepasste Überstromauslösung.

Der Vorteil des beschriebenen Vorgehens besteht darin, dass eine Vielzahl von Parametern initial bei der Inbetriebnahme der Überstromschutzvorrichtung und/oder des Verbrauchers in dem Gleichstromnetz 1 und/oder auch zur Laufzeit angepasst werden kann. So kann beispielsweise der erste und/oder der zweite Faktor in Abhängigkeit des zu schützenden Verbrauchers parametrierbar oder parametriert sein. Alternativ oder zusätzlich können der erste oder der zweite Faktor in Abhängigkeit des Verlaufs der Auslösekennlinie (MM1 oder MM2) parametrierbar oder parametriert sein. Alternativ oder zusätzlich kann der vorab festgelegte Schwellwert in Abhängigkeit des zu schützenden Verbrauchers parametrierbar oder parametriert sein. Dies erlaubt es, die Überstromschutzvorrichtung genau auf den ihr zugeordneten Verbraucher 11, 12 abzustimmen. Durch die unterschiedliche Bewertung der Stromrichtung ist es nicht nur möglich, Gerätevarianz einzusparen. Vielmehr kann auch eine vom Kunden gewünschte Selektivität realisiert werden. Dies bedeutet, nur das dem Fehler am nächsten gelegene Schutzgerät löst aus und schaltet den Fehler ab.

Um die stromrichtungsabhängige Gewichtung des Stroms bei der Ermittlung des aktuellen Auslösewerts vornehmen zu können, muss die Strommesseinrichtung 16 dazu eingerichtet sein, das Vorzeichen, d.h. die Richtung, des durch sie fließenden Stroms zu erkennen. Dies kann beispielsweise durch eine Strommesseinrichtung bewerkstelligt werden, die einen auf dem Hall-Prinzip basierenden Sensor umfasst. Ein solcher hochintegrierter Hall-Sensor ist z.B. in der EP 2 619 595 B1 beschrieben.

Das steuerbare Schaltelement 15 und die Strommesseinrichtung 16 sind, wie dies zeichnerisch dargestellt ist, vorzugsweise als Baueinheit ausgebildet. Dies ist jedoch nicht zwingend.

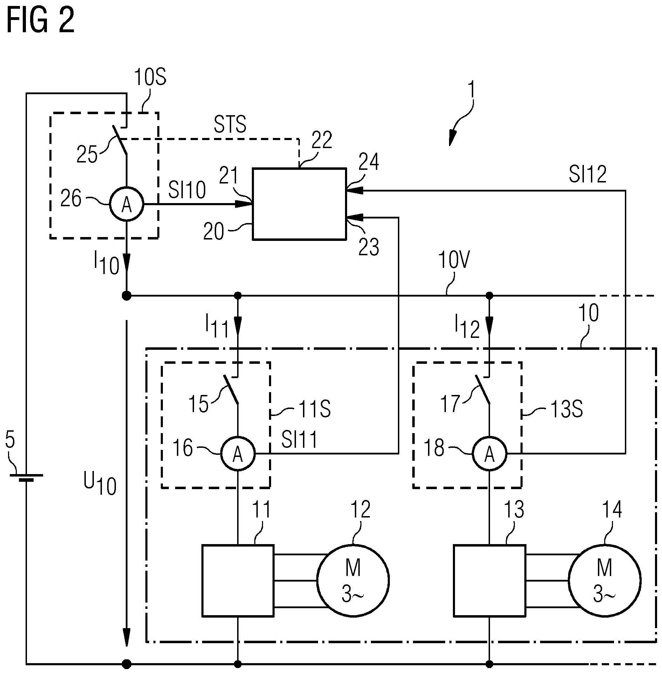

Fig. 2 zeigt eine schematische Darstellung eines beispielhaften Gleichstromnetzes 1, an das eine Lastanordnung mit beispielhaft zwei unterschiedlichen Verbrauchern 11, 12 bzw. 13, 14 angeschlossen ist. Die Gesamtheit aus Verbrauchern 11, 12 bzw. 13, 14 und den ihnen zugeordneten Überstromschutzvorrichtungen 11S bzw. 13S wird vorliegend als Lastanordnung 10 bezeichnet. Wie der zeichnerischen Darstellung ohne Weiteres zu entnehmen ist, handelt es sich auch bei den Verbrauchern 13, 14 um einen Wechselrichter 13 und einen von diesem versorgten Motor 14. Bei den Motoren 12, 14 kann es sich z.B. um Motoren stark unterschiedlicher NennLeistung handeln.

Jeder der Verbraucher 11, 12 bzw. 13, 14 ist über die jeweils zugeordnete Überstromschutzvorrichtung 11S, 13S mit der Stromschiene 10V verbunden. Ferner ist eine weitere Überstromschutzvorrichtung 10S vorgesehen, welche die Stromschiene 10V mit der Batterie 5 verbindet. Der Aufbau sämtlicher Überstromschutzvorrichtungen 10S, 11S und 13S entspricht dem Aufbau, wie dieser in Verbindung mit Fig. 1 beschrieben wurde. Auf eine erneute Erläuterung wird daher verzichtet.

Im Unterschied zum vorangegangenen Ausführungsbeispiel werden die von den jeweiligen Strommesseinrichtungen 16, 18, 26 der jeweiligen Überstromschutzvorrichtungen 11S, 13S, 10S bereitgestellten Erfassungswerte SI11, SI12 und SI10 an eine zentrale Recheneinheit 20 des Gleichstromnetzes zur Verarbeitung übertragen. Die Steuereinheit 20 wertet in diesem Ausführungsbeispiel sämtliche Erfassungswerte aus und führt für jeden Verbraucher 11, 12 bzw. 13, 14 sowie die Lastanordnung 10 als Ganzes das in Verbindung mit Fig. 1 beschriebene Verfahren aus, wobei für jeden der Verbraucher 11, 12 bzw. 13, 14 bzw. die Lastanordnung 10, die jeweils zugeordnete (gleiche oder unterschiedliche) stromabhängige Auslösekennlinie und jeweils vorab festgelegte (gleiche oder unterschiedliche) Schwellwerte sowie (gleiche oder unterschiedliche) erste und zweite Faktoren verarbeitet werden.

Im Falle der Feststellung eines Überstroms in einem der Zweige kann dann das betreffende steuerbare Schaltelement 15 bzw. 16 oder 25 durch die Steuereinheit 20 sperrend geschaltet werden. Aus Gründen der Übersichtlichkeit ist lediglich ein Steuersignal STS zur Ansteuerung des steuerbaren Schaltelements 25 der Überstromschutzvorrichtung 10S dargestellt.

Die jeweiligen Erfassungswerte SI11, SI12 und SI10 werden an Eingängen 21, 23, 24 der Steuereinheit 20 bereitgestellt. Das Steuersignal STS für das steuerbare Schaltelement 25 der Überstromschutzvorrichtung 10S wird einem Ausgang 22 der Steuereinheit 20 bereitgestellt. Es versteht sich, dass entsprechende Ausgänge, an denen entsprechende Steuersignale bereitgestellt sind, auch für die jeweiligen steuerbaren Schaltelemente 15, 17 der Überstromschutzvorrichtungen 11S, 13S an der Steuereinheit 20 vorgesehen sind.

Eine wie in Fig. 2 dargestellte zentrale Verarbeitung zur Durchführung des erfindungsgemäßen Verfahrens ist lediglich beispielhaft. Ebenso könnte das in Verbindung mit Fig. 1 beschriebene Verfahren auch in einer jeweiligen Recheneinheit einer jeden Überstromschutzvorrichtung 11S, 13S, 10S durchgeführt werden. Auch eine Kombination unterschiedlicher Aufgabenverteilungen ist denkbar.

Das Vorsehen einer zentralen Steuereinheit erleichtert die Parametrierung einer Vielzahl an unterschiedlichen Überstromschutzvorrichtungen bzw. Verbrauchern.

## Patentansprüche

1. Überstromschutzvorrichtung für den Schutz eines in einem Gleichstromnetz (1) angeordneten Verbrauchers (11, 12; 13, 14), wobei der Verbraucher (11, 12; 13, 14) in dem Gleichstromnetz (1) über die Überstromschutzvorrichtung (115, 13S) mit einer, mit einem Versorgungspotential des Gleichstromnetzes (1) verbindbaren oder verbundenen, Versorgungsschiene (10V) gekoppelt ist, wobei die Überstromschutzvorrichtung (115, 13S) dazu ausgebildet ist,
- basierend auf einem Erfassungswert eines durch die Überstromschutzvorrichtung (115, 13S) fließenden Stroms (I₁₁, I₁₃) und einer dem Verbraucher (11, 12; 13, 14) zugeordneten stromabhängigen Auslösekennlinie einen aktuellen Auslösewert zu ermitteln;
- den aktuellen Auslösewert mit einem vorab festgelegten Schwellwert zu vergleichen; und
- auszulösen, wenn der aktuelle Auslösewert den Schwellwert überschreitet und nicht auszulösen, wenn der aktuelle Auslösewert den Schwellwert nicht überschreitet;
- wobei bei der Ermittlung des aktuellen Auslösewerts anhand der Auslösekennlinie der Erfassungswert des durch die Überstromschutzvorrichtung fließenden Stroms abhängig von der Stromrichtung mit einem ersten oder einem zweiten Faktor berücksichtigt wird.

2. Überstromschutzvorrichtung nach Anspruch 1, **dadurch gekennzeichnet, dass** diese ein steuerbares Schaltelement (15, 17) und eine zu diesem in Serie verschaltete Strommesseinrichtung (16, 18) umfasst, wobei die Strommesseinrichtung (16, 18) die Höhe des während einer Einschaltphase des steuerbaren Schaltelements (15, 17) durch das steuerbare Schaltelement (15, 17) fließenden Stroms erfasst und als Erfassungswert (SI11, SI13) bereitstellt.

3. Überstromschutzvorrichtung nach Anspruch 2, **dadurch gekennzeichnet, dass** die Strommesseinrichtung (16, 18) einen auf dem Hall-Prinzip basierenden Sensor umfasst.

4. Überstromschutzvorrichtung nach einem der vorhergehenden Ansprüche, **dadurch gekennzeichnet, dass** der erste und/oder der zweite Faktor in Abhängigkeit des zu schützenden Verbrauchers (11, 12; 13, 14) parametrierbar oder parametriert sind.

5. Überstromschutzvorrichtung nach einem der vorhergehenden Ansprüche, **dadurch gekennzeichnet, dass** der erste und/oder der zweite Faktor in Abhängigkeit des Verlaufs der Auslösekennlinie parametrierbar oder parametriert sind.

6. Überstromschutzvorrichtung nach einem der vorhergehenden Ansprüche, **dadurch gekennzeichnet, dass** der vorab festgelegte Schwellwert in Abhängigkeit des zu schützenden Verbrauchers (11, 12; 13, 14) parametrierbar oder parametriert ist.

7. Überstromschutzvorrichtung nach einem der vorhergehenden Ansprüche, **dadurch gekennzeichnet, dass** die Auslösekennlinie eine Modellierung der Erwärmung des zu schützenden Verbrauchers (11, 12; 13, 14) repräsentiert.

8. Gleichstromnetz, umfassend:
- eine Versorgungsschiene (10V), die mit einem Versorgungspotential des Gleichstromnetzes (1) verbindbar oder verbunden ist;
- eine zumindest einen Verbraucher (11, 12; 13, 14) umfassende Lastanordnung (10), wobei jeder der Verbraucher (11, 12; 13, 14) über eine zugeordnete, steuerbare Überstromschutzvorrichtung (115, 13S) mit der Versorgungsschiene (10V) gekoppelt ist und wobei jedem der Verbraucher (11, 12; 13, 14) eine stromabhängige Auslösekennlinie zugeordnet ist; **dadurch gekennzeichnet, dass**
die Überstromschutzvorrichtung (115, 13S) gemäß einem der vorhergehenden Ansprüche ausgebildet ist.

9. Gleichstromnetz nach Anspruch 8, **dadurch gekennzeichnet, dass** die Versorgungsschiene (10V) über eine Überschutzvorrichtung gemäß einem der vorhergehenden Ansprüche mit einem Versorgungspotential des Gleichstromnetzes (1) verbindbar oder verbunden ist, wobei die Überstromschutzvorrichtung (115, 13S) dazu ausgebildet ist, eine der Lastanordnung zugeordnete stromabhängige Auslösekennlinie zu verarbeiten.

10. Gleichstromnetz nach Anspruch 8 oder 9, **dadurch gekennzeichnet, dass** bei einer Mehrzahl an Verbrauchern (11, 12; 13, 14) jedem Verbraucher (11, 12; 13, 14) eine jeweilige stromabhängige Auslösekennlinie zugeordnet ist, die paarweise gleich oder unterschiedlich sein können.

11. Gleichstromnetz nach einem der Ansprüche 8 bis 10, **dadurch gekennzeichnet, dass** bei einer Mehrzahl an Verbrauchern (11, 12; 13, 14) jedem Verbraucher (11, 12; 13, 14) ein jeweiliger vorab festgelegter Schwellwert zugeordnet ist, die paarweise gleich oder unterschiedlich sein können.

12. Verfahren zum Betreiben einer Überstromschutzvorrichtung für den Schutz eines in einem Gleichstromnetz (1) angeordneten Verbrauchers (11, 12; 13, 14), wobei der Verbraucher (11, 12; 13, 14) in dem Gleichstromnetz (1) über die Überstromschutzvorrichtung (115, 13S) mit einer, mit einem Versorgungspotential des Gleichstromnetzes (1) verbindbaren oder verbundenen, Versorgungsschiene (10V) gekoppelt ist, bei dem
- basierend auf einem Erfassungswert eines durch die Überstromschutzvorrichtung (115, 13S) fließenden Stroms (I₁₁, I₁₃) und einer dem Verbraucher (11, 12; 13, 14) zugeordneten stromabhängigen Auslösekennlinie ein aktueller Auslösewert ermittelt wird, wobei bei der Ermittlung des aktuellen Auslösewerts anhand der Auslösekennlinie der Erfassungswert des durch die Überstromschutzvorrichtung fließenden Stroms abhängig von der Stromrichtung mit einem ersten oder einem zweiten Faktor berücksichtigt wird;
- der aktuelle Auslösewert mit einem vorab festgelegten Schwellwert verglichen wird; und
- die Überstromschutzvorrichtung ausgelöst wird, wenn der aktuelle Auslösewert den Schwellwert überschreitet und die Überstromschutzvorrichtung nicht ausgelöst wird, wenn der aktuelle Auslösewert den Schwellwert nicht überschreitet.

13. Computerprogrammprodukt, das direkt in den internen Speicher einer digitalen Steuereinheit einer Überstromschutzvorrichtung geladen werden kann und Softwarecodeabschnitte umfasst, mit denen die Schritte gemäß Anspruch 12 ausgeführt werden, wenn das Produkt auf der Steuereinheit läuft.

14. Verfahren zum Betreiben eines Gleichstromnetzes, das
- eine Versorgungsschiene (10V), die mit einem Versorgungspotential des Gleichstromnetzes (1) verbindbar oder verbunden ist, und
- eine zumindest einen Verbraucher (11, 12; 13, 14) umfassende Lastanordnung (10), wobei jeder der Verbraucher (11, 12; 13, 14) über eine zugeordnete, steuerbare Überstromschutzvorrichtung (115, 13S) mit der Versorgungsschiene (10V) gekoppelt ist und wobei jedem der Verbraucher (11, 12; 13, 14) eine stromabhängige Auslösekennlinie zugeordnet ist, umfasst, bei dem für jeden des zumindest einen Verbrauchers (11, 12; 13, 14) unabhängig voneinander
- basierend auf einem Erfassungswert eines durch die dem Verbraucher zugeordnete Überstromschutzvorrichtung (115, 13S) fließenden Stroms (I₁₁, I₁₃) und einer dem jeweiligen Verbraucher (11, 12; 13, 14) zugeordneten stromabhängigen Auslösekennlinie ein aktueller Auslösewert ermittelt wird, wobei bei der Ermittlung des aktuellen Auslösewerts anhand der Auslösekennlinie der Erfassungswert des durch die Überstromschutzvorrichtung fließenden Stroms abhängig von der Stromrichtung mit einem ersten oder einem zweiten Faktor berücksichtigt wird;
- der aktuelle Auslösewert mit einem für den jeweiligen Verbraucher (11, 12; 13, 14) vorab festgelegten Schwellwert verglichen wird; und
- die einem jeweiligen Verbraucher (11, 12; 13, 14) zugeordnete Überstromschutzvorrichtung ausgelöst wird, wenn der aktuelle Auslösewert den Schwellwert überschreitet und die Überstromschutzvorrichtung nicht ausgelöst wird, wenn der aktuelle Auslösewert den Schwellwert nicht überschreitet.

15. Verfahren nach Anspruch 14, bei dem dieses durch eine zentrale Steuereinheit (20) oder durch Recheneinheiten der Überstromschutzvorrichtungen durchgeführt wird.

16. Computerprogrammprodukt, das direkt in den internen Speicher einer digitalen Steuereinheit geladen werden kann und Softwarecodeabschnitte umfasst, mit denen die Schritte gemäß Anspruch 14 oder 15 ausgeführt werden, wenn das Produkt auf der Steuereinheit läuft.

## Claims

1. Overcurrent protection device for protecting a consumer (11, 12; 13, 14) arranged in a DC grid (1), wherein in the DC grid (1) the consumer (11, 12; 13, 14) is coupled via the overcurrent protection device (11S, 13S) to a supply rail (10V), which can be connected or is connected to a supply potential of the DC grid (1), wherein the overcurrent protection device (11S, 13S) is designed
- to ascertain a present trigger value on the basis of a detection value of a current (I₁₁, I₁₃) flowing through the overcurrent protection device (11S, 13S) and on the basis of a current-dependent trigger characteristic curve associated with the consumer (11, 12; 13, 14);
- to compare the present trigger value with a previously stipulated threshold value; and
- to trigger when the present trigger value exceeds the threshold value and not to trigger when the present trigger value does not exceed the threshold value;
- wherein, when the present trigger value is ascertained based on the trigger characteristic curve, the detection value of the current flowing through the overcurrent protection device is taken into consideration together with a first or a second factor, depending on the current direction.

2. Overcurrent protection device according to Claim 1, **characterized in that** said overcurrent protection device comprises a controllable switching element (15, 17) and a current measurement device (16, 18) interconnected in series therewith, wherein the current measurement device (16, 18) detects the level of the current flowing through the controllable switching element (15, 17) during a switch-on phase of the controllable switching element (15, 17) and provides said level as detection value (SI11, SI13).

3. Overcurrent protection device according to Claim 2, **characterized in that** the current measurement device (16, 18) comprises a sensor based on the Hall principle.

4. Overcurrent protection device according to any one of the preceding claims, **characterized in that** the first and/or the second factor can be parameterized or is/are parameterized depending on the consumer (11, 12; 13, 14) that is to be protected.

5. Overcurrent protection device according to any one of the preceding claims, **characterized in that** the first and/or the second factor can be parameterized or is/are parameterized depending on the profile of the trigger characteristic curve.

6. Overcurrent protection device according to any one of the preceding claims, **characterized in that** the previously stipulated threshold value can be parameterized or is parameterized depending on the consumer (11, 12; 13, 14) that is to be protected.

7. Overcurrent protection device according to any one of the preceding claims, **characterized in that** the trigger characteristic curve represents a modelling of the heating of the consumer (11, 12; 13, 14) that is to be protected.

8. DC grid, comprising:
- a supply rail (10V), which can be connected or is connected to a supply potential of the DC grid (1);
- a load assembly (10) comprising at least one consumer (11, 12; 13, 14), wherein each of the consumers (11, 12; 13, 14) is coupled to the supply rail (10V) via an associated controllable overcurrent protection device (11S, 13S) and wherein a current-dependent trigger characteristic curve is associated with each of the consumers (11, 12; 13, 14); **characterized in that**
the overcurrent protection device (11S, 13S) is designed according to any one of the preceding claims.

9. DC grid according to Claim 8, **characterized in that** the supply rail (10V) can be connected or is connected to a supply potential of the DC grid (1) via an overcurrent protection device according to any one of the preceding claims, wherein the overcurrent protection device (11S, 13S) is designed to process a current-dependent trigger characteristic curve associated with the load assembly.

10. DC grid according to Claim 8 or 9, **characterized in that**, in the case of a plurality of consumers (11, 12; 13, 14), a respective current-dependent trigger characteristic curve is associated with each consumer (11, 12; 13, 14), said trigger characteristic curves being able to be the same or different in pairs.

11. DC grid according to any one of Claims 8 to 10, **characterized in that**, in the case of a plurality of consumers (11, 12; 13, 14), a respective previously stipulated threshold value is associated with each consumer (11, 12; 13, 14), said threshold values being able to be the same or different in pairs.

12. Method for operating an overcurrent protection device for protecting a consumer (11, 12; 13, 14) arranged in a DC grid (1), wherein in the DC grid (1) the consumer (11, 12; 13, 14) is coupled via the overcurrent protection device (11S, 13S) to a supply rail (10V), which can be connected or is connected to a supply potential of the DC grid (1), in which
- a present trigger value is ascertained on the basis of a detection value of a current (I₁₁, I₁₃) flowing through the overcurrent protection device (11S, 13S) and on the basis of a current-dependent trigger characteristic curve associated with the consumer (11, 12; 13, 14), wherein, when the present trigger value is ascertained based on the trigger characteristic curve, the detection value of the current flowing through the overcurrent protection device is taken into consideration together with a first or a second factor, depending on the current direction;
- the present trigger value is compared with a previously stipulated threshold value; and
- the overcurrent protection device is triggered when the present trigger value exceeds the threshold value and the overcurrent protection device is not triggered when the present trigger value does not exceed the threshold value.

13. Computer program product, which can be loaded directly into the internal memory of a digital control unit of an overcurrent protection device and comprises software code sections, using which the steps according to Claim 12 are executed when the product is run on the control unit.

14. Method for operating a DC grid, which comprises
- a supply rail (10V), which can be connected or is connected to a supply potential of the DC grid (1), and
- a load assembly (10) comprising at least one consumer (11, 12; 13, 14), wherein each of the consumers (11, 12; 13, 14) is coupled to the supply rail (10V) via an associated controllable overcurrent protection device (11S, 13S) and wherein a current-dependent trigger characteristic curve is associated with each of the consumers (11, 12; 13, 14), in which, for each of the at least one consumer (11, 12; 13, 14), independently of one another,
- a present trigger value is ascertained on the basis of a detection value of a current (I₁₁, I₁₃) flowing through the overcurrent protection device (11S, 13S) associated with the consumer and on the basis of a current-dependent trigger characteristic curve associated with the respective consumer (11, 12; 13, 14), wherein, when the present trigger value is ascertained based on the trigger characteristic curve, the detection value of the current flowing through the overcurrent protection device is taken into consideration together with a first or a second factor, depending on the current direction;
- the present trigger value is compared with a threshold value previously stipulated for the respective consumer (11, 12; 13, 14); and
- the overcurrent protection device associated with a respective consumer (11, 12; 13, 14) is triggered when the present trigger value exceeds the threshold value and the overcurrent protection device is not triggered when the present trigger value does not exceed the threshold value.

15. Method according to Claim 14, in which said method is carried out by a central control unit (20) or by computation units of the overcurrent protection devices.

16. Computer program product, which can be loaded directly into the internal memory of a digital control unit and comprises software code sections, using which the steps according to Claim 14 or 15 are executed when the product is run on the control unit.

## Revendications

1. Dispositif de protection contre les surintensités de courant destiné à protéger un consommateur (11, 12 ; 13, 14) agencé dans un réseau de courant continu (1), dans lequel le consommateur (11, 12 ; 13, 14) est couplé, dans le réseau de courant continu (1), par le dispositif de protection contre les surintensités (11S, 13S) à un rail d'alimentation (10V) pouvant être relié ou étant relié à un potentiel d'alimentation du réseau de courant continu (1), dans lequel le dispositif de protection contre les surintensités de courant (11S, 13S) est conçu
- pour déterminer, sur la base d'une valeur de détection d'un courant (I₁₁, I₁₃) s'écoulant à travers le dispositif de protection contre les surintensités de courant (11S, 13S) et d'une courbe caractéristique de déclenchement dépendante du courant, affectée au consommateur (11, 12 ; 13, 14), une valeur actuelle de déclenchement ;
- pour comparer la valeur actuelle de déclenchement à une valeur de seuil fixée au préalable ; et
- pour se déclencher, lorsque la valeur actuelle de déclenchement dépasse la valeur de seuil et ne pas se déclencher, lorsque la valeur actuelle de déclenchement ne dépasse pas la valeur de seuil ;
- dans lequel lors de la détermination de la valeur actuelle de déclenchement à l'aide de la courbe caractéristique de déclenchement, la valeur de détection du courant s'écoulant à travers le dispositif de protection contre les surintensités de courant est prise en compte en fonction du sens du courant avec un premier ou un deuxième facteur.

2. Dispositif de protection contre les surintensités de courant selon la revendication 1, **caractérisé en ce que** celui-ci comprend un élément de commutation pouvant être commandé (15, 17) et un dispositif de mesure du courant (16, 18) interconnecté en série à celui-ci, dans lequel le dispositif de mesure du courant (16, 18) détecte le niveau du courant s'écoulant à travers l'élément de commutation (15, 17) pouvant être commandé pendant une phase de fonctionnement de l'élément de commutation (15, 17) pouvant être commandé et met celui-ci à disposition comme valeur de détection (SI11, SI13).

3. Dispositif de protection contre les surintensités de courant selon la revendication 2, **caractérisé en ce que** le dispositif de mesure du courant (16, 18) comprend un capteur basé sur le principe de Hall.

4. Dispositif de protection contre les surintensités de courant selon l'une des revendications précédentes, **caractérisé en ce que** le premier et/ou le deuxième facteur peuvent être paramétrés ou sont paramétrés en fonction du consommateur (11, 12 ; 13, 14) à protéger.

5. Dispositif de protection contre les surintensités de courant selon l'une des revendications précédentes, **caractérisé en ce que** le premier et/ou le deuxième facteur peuvent être paramétrés ou sont paramétrés en fonction du tracé de la courbe caractéristique de déclenchement.

6. Dispositif de protection contre les surintensités de courant selon l'une des revendications précédentes, **caractérisé en ce que** la valeur de seuil fixée au préalable peut être paramétrée ou est paramétrée en fonction du consommateur à protéger (11, 12 ; 13, 14).

7. Dispositif de protection contre les surintensités de courant selon l'une des revendications précédentes, **caractérisé en ce que** la courbe caractéristique de déclenchement représente une modélisation de l'échauffement du consommateur à protéger (11, 12 ; 13, 14).

8. Réseau de courant continu, comprenant :
- un rail d'alimentation (10V) qui peut être relié ou est relié à un potentiel d'alimentation du réseau de courant continu (1) ;
- un dispositif de charge (10) comprenant au moins un consommateur (11, 12 ; 13, 14), dans lequel chacun des consommateurs (11, 12 ; 13, 14) est couplé au rail d'alimentation (10V) par un dispositif de protection contre les surintensités (11S, 13S) affecté pouvant être commandé, et dans lequel est affectée à chacun des consommateurs (11, 12 ; 13, 14) une courbe caractéristique de déclenchement dépendante du courant ; **caractérisé en ce que** le dispositif de protection contre les surintensités (115, 13S) est conçu selon l'une des revendications précédentes.

9. Réseau de courant continu selon la revendication 8, **caractérisé en ce que** le rail d'alimentation (10V) peut être relié ou est relié à un potentiel d'alimentation du réseau de courant continu (1) par un dispositif de protection contre les surintensités selon l'une des revendications précédentes, dans lequel le dispositif de protection contre les surintensités (11S, 13S) est conçu pour traiter une courbe caractéristique de déclenchement dépendante du courant, affectée au dispositif de charge.

10. Réseau de courant continu selon la revendication 8 ou 9, **caractérisé en ce que** lors d'une pluralité de consommateurs (11, 12 ; 13, 14), une courbe caractéristique de déclenchement respective dépendante du courant est affectée à chaque consommateur (11, 12 ; 13, 14), qui peuvent être par paires semblables ou différentes.

11. Réseau de courant continu selon l'une des revendications 8 à 10, **caractérisé en ce que** lors d'une pluralité de consommateurs (11, 12 ; 13, 14), une valeur de seuil respective fixée au préalable est affectée à chaque consommateur (11, 12 ; 13, 14), qui peuvent être par paires semblables ou différentes.

12. Procédé pour faire fonctionner un dispositif de protection contre les surintensités de courant destiné à protéger un consommateur (11, 12 ; 13, 14) disposé dans un réseau de courant continu (1), dans lequel le consommateur (11, 12 ; 13, 14) est couplé, dans le réseau de courant continu (1), par le dispositif de protection contre les surintensités (11S, 13S) à un rail d'alimentation (10V) pouvant être relié ou étant relié à un potentiel d'alimentation du réseau de courant continu (1), dans lequel
- sur la base d'une valeur de détection d'un courant (I₁₁, I₁₃) s'écoulant à travers le dispositif de protection contre les surintensités de courant (115, 13S) et d'une courbe caractéristique de déclenchement dépendante du courant, affectée au consommateur (11, 12 ; 13, 14), une valeur actuelle de déclenchement est déterminée ; dans lequel lors de la détermination de la valeur actuelle de déclenchement à l'aide de la courbe caractéristique de déclenchement, la valeur de détection du courant s'écoulant à travers le dispositif de protection contre les surintensités de courant est prise en compte en fonction du sens du courant avec un premier ou un deuxième facteur ;
- la valeur actuelle de déclenchement est comparée à une valeur de seuil fixée au préalable ; et
- le dispositif de protection contre les surintensités de courant est déclenché lorsque la valeur actuelle de déclenchement dépasse la valeur de seuil et le dispositif de protection contre les surintensités n'est pas déclenché lorsque la valeur actuelle de déclenchement ne dépasse pas la valeur de seuil.

13. Produit de programme informatique qui peut être chargé directement dans la mémoire interne d'une unité de commande numérique d'un dispositif de protection contre les surintensités de courant et comprend des sections de code de logiciel avec lesquelles peuvent être exécutées les étapes selon la revendication 12, lorsque le produit fonctionne sur l'unité de commande.

14. Procédé de fonctionnement d'un réseau de courant continu qui
- comprend un rail d'alimentation (10V) qui peut être relié ou est relié à un potentiel d'alimentation du réseau de courant continu (1), et
- un dispositif de charge (10) comprenant au moins un consommateur (11, 12 ; 13, 14), dans lequel chacun des consommateurs (11, 12 ; 13, 14) est couplé au rail d'alimentation (10V) par un dispositif de protection contre les surintensités (11S, 13S) affecté pouvant être commandé, et dans lequel est affectée à chacun des consommateurs (11, 12 ; 13, 14) une courbe caractéristique de déclenchement dépendante du courant, dans lequel pour chacun du au moins un consommateur (11, 12 ; 13, 14) indépendamment les uns des autres
- est déterminée, sur la base d'une valeur de détection d'un courant (I₁₁, I₁₃) s'écoulant à travers le dispositif de protection contre les surintensités de courant (11S, 13S) affecté au consommateur et d'une courbe caractéristique de déclenchement dépendante du courant, affectée au consommateur respectif (11, 12 ; 13, 14), une valeur actuelle de déclenchement, dans lequel lors de la détermination de la valeur actuelle de déclenchement à l'aide de la courbe caractéristique de déclenchement, la valeur de détection du courant s'écoulant à travers le dispositif de protection contre les surintensités de courant est prise en compte en fonction du sens du courant avec un premier ou un deuxième facteur ;
- la valeur actuelle de déclenchement est comparée à une valeur de seuil fixée au préalable pour le consommateur respectif (11, 12 ; 13, 14) ; et
- le dispositif de protection contre les surintensités de courant affecté à un consommateur respectif (11, 12 ; 13, 14) est déclenché, lorsque la valeur actuelle de déclenchement dépasse la valeur de seuil et le dispositif de protection contre les surintensités de courant n'est pas déclenché, lorsque la valeur actuelle de déclenchement ne dépasse pas la valeur de seuil.

15. Procédé selon la revendication 14, dans lequel celui-ci est réalisé par une unité de commande centrale (20) ou par des unités de calcul des dispositifs de protection contre les surintensités de courant.

16. Produit de programme informatique qui peut être chargé directement dans la mémoire interne d'une unité de commande numérique et comprend des sections de code de logiciel avec lesquelles sont exécutées les étapes selon la revendication 14 ou 15 lorsque le produit fonctionne sur l'unité de commande.
